# EUROPEAN PATENT SPECIFICATION

(11) **EP 3 812 793 B1**
(45) Date of publication and mention of the grant of the patent: **01.02.2023**
(21) Application number: 19910614.7
(22) Date of filing: 17.12.2019
(51) Int. Cl.: G01S 15/86, G01S 7/539, G01S 15/931, G01S 17/86, G01S 17/931, G01S 15/89

(54) **INFORMATION PROCESSING METHOD, SYSTEM AND EQUIPMENT, AND COMPUTER STORAGE MEDIUM**
INFORMATIONSVERARBEITUNGSVERFAHREN, SYSTEM UND VORRICHTUNG SOWIE COMPUTERSPEICHERMEDIUM
PROCÉDÉ, SYSTÈME ET ÉQUIPEMENT DE TRAITEMENT D'INFORMATIONS, ET SUPPORT DE STOCKAGE INFORMATIQUE

(30) Priority: 15.01.2019 CN 201910034417
(43) Date of publication of application: 28.04.2021
(73) Proprietor: Apollo Intelligent Driving Technology (Beijing) Co., Ltd., Haidian District Beijing 100085 (CN)
(72) Inventor: ZHU, Xiaoxing, Beijing 100085 (CN); LIU, Xiang, Beijing 100085 (CN); YANG, Fan, Beijing 100085 (CN)
(74) Representative: dompatent von Kreisler Selting Werner - Partnerschaft von Patent- und Rechtsanwälten mbB
(86) International application number: PCT/CN2019/126008
(87) International publication number: WO 2020/147485

(56) References cited:
- CN-A- 105 955 257
- CN-A- 105 974 920
- CN-A- 106 394 545
- CN-A- 108 037 515
- CN-A- 108 037 515
- CN-A- 109 814 112
- DE-A1-102016 210 534
- US-A1- 2017 109 644
- US-A1- 2018 364 717
- US-B1- 6 671 582

## Description

### Field of the Disclosure

The present disclosure relates to the field of automatic control, and particularly to an information processing method, system, device and computer storage medium.

### Background of the Disclosure

In a driverless vehicle are integrated many types of sensors such as a GPS-IMU (Global Positioning System-Inertial Measurement Unit) combination navigation module, a camera, a LiDAR (Light Detection and Ranging) and a millimeter wave radar.

Different types of sensors have different advantages and disadvantages. For example, LiDARs mounted at the front end of the center of the driverless vehicle are advantageous in a broad detection range, a higher precision of sensed data, and a far detectable distance in the longitudinal direction. Due to the principle of laser ranging, there is a detection blind region within a close distance range. To remedy blindness in the detection blind region, an ultrasonic radar and a forward LiDAR are generally mounted at the position of the front bumper of the vehicle body in the industry. When the ultrasonic radar measures a far target, its echo signal is weak and affects the measurement precision. However, in short-distance measurement, the ultrasonic radar has a very big advantage. However, on account of the problem with the measurement precision of the ultrasonic radar, a specific position of the obstacle cannot be depicted, for example, its FOA is 45 degrees; so long as there is an obstacle in the range, the ultrasonic radar returns the information about the obstacle, but the ultrasonic radar cannot determine a specific position of the obstacle in a detection sector, which might cause misjudgment and affects the driving of the driverless vehicle. For example, an obstacle on a lateral front side of the driverless vehicle does not affect travel, but it is impossible to judge according to the obstacle information returned by the ultrasonic radar whether the obstacle is on the lateral front side or directly in front of the driverless vehicle, so the driverless vehicle automatically stops to avoid collision and normal driving is affected.

A patent application CN108 037 515A, published on May 15, 2018, entitled "A kind of laser radar and ultrasonic radar information fusion system and method", describes an information fusion system for LiDAR and ultrasonic radar, which includes a multi-line LiDAR, a ultrasonic radar and an embedded decision-making controller for radar information fusion, wherein the decision-making controller receives the detection information of the multi-line LiDAR and the ultrasonic radar, and performs signal fusion processing on the data, and uses the grid processing as the basis for decision-making to make estimates.

A patent application DE10 2016 210534A1, published on December 4, 2017, entitled "Method for classifying an environment of a vehicle", provides a method including the steps of providing a representation of the environment, the representation comprising a map having occupancy probabilities of predefined subregions within the map, and classifying the environment into predefined categories by a machine learning method.

### Summary of the Disclosure

Aspects of the present disclosure provide an information processing method, system, device and computer storage medium, to reduce the misjudgment caused by the ultrasonic radar.

An aspect of the present disclosure provides an information processing method, comprising:
obtaining obstacle information acquired by an ultrasonic radar and a LiDAR respectively;
fusing the obstacle information acquired by the LiDAR with the obstacle information acquired by the ultrasonic radar,
wherein the fusing the obstacle information acquired by the LiDAR with the obstacle information acquired by the ultrasonic radar comprises:
   unifying coordinates in a LiDAR coordinate system and coordinates in an ultrasonic radar coordinate system into a reference coordinate system;
   fusing the detection overlapping regions of the LiDAR and the ultrasonic radar, gridding an obstacle recognition result in the detection overlapping region, and superimposing the unified LiDAR coordinates and ultrasonic radar coordinates in the grids;
   fusing the superimposed LiDAR coordinates and ultrasonic radar coordinates, and
   determining a vehicle decision according to the post-fusion obstacle recognition result in the detection overlapping region and the obstacle recognition result outside the detection overlapping region according to the LiDAR coordinates or ultrasonic radar coordinates, respectively.

The above aspect and any possible implementation further provides an implementation: the ultrasonic radar is mounted at the front of a vehicle body of the driverless vehicle and used to detect obstacle information in front of and laterally in front of the vehicle;
the LiDAR is mounted at the front of the vehicle body of the driverless vehicle and used to detect the obstacle information in front of and laterally in front of the vehicle.

The above aspect and any possible implementation further provides an implementation: the reference coordinate system is a geodetic coordinate system or a vehicle coordinate system.

The above aspect and any possible implementation further provides an implementation: the fusing the superimposed LiDAR coordinates and ultrasonic radar coordinates comprises:
judging that a grid having the LiDAR coordinates as well as ultrasonic radar coordinates is occupied; judging that a grid only having the ultrasonic radar coordinates is not occupied.

The above aspect and any possible implementation further provides an implementation: the method further comprises:
outside the detection overlapping regions, recognizing the obstacle according to the LiDAR coordinates or ultrasonic radar coordinates, respectively.

Another aspect of the present disclosure provides an information processing system, comprising:
an obtaining module configured to obtain obstacle information acquired by an ultrasonic radar and a LiDAR respectively;
a fusing module configured to fuse the obstacle information acquired by the LiDAR with the obstacle information acquired by the ultrasonic radar,
wherein the fusing module comprises:
   a unifying submodule configured to unify coordinates in a LiDAR coordinate system and coordinates in an ultrasonic radar coordinate system into a reference coordinate system;
   a superimposing submodule configured to fuse the detection overlapping regions of the LiDAR and the ultrasonic radar, grid an obstacle recognition result in the detection overlapping region, and superimpose the unified LiDAR coordinates and ultrasonic radar coordinates in the grids
   a fusing submodule configured to fuse the superimposed LiDAR coordinates and ultrasonic radar coordinates, and
   a decision-making module configured to determine a vehicle decision according to the post-fusion obstacle recognition result in the detection overlapping region and the obstacle recognition result outside the detection overlapping region according to the LiDAR coordinates or ultrasonic radar coordinates, respectively.

The above aspect and any possible implementation further provides an implementation: the ultrasonic radar is mounted at the front of a vehicle body of the driverless vehicle and used to detect obstacle information in front of and laterally in front of the vehicle;
the LiDAR is mounted at the front of the vehicle body of the driverless vehicle and used to detect the obstacle information in front of and laterally in front of the vehicle.

The above aspect and any possible implementation further provides an implementation: the reference coordinate system is a geodetic coordinate system or a vehicle coordinate system.

The above aspect and any possible implementation further provides an implementation: the fusing submodule is specifically configured to:
judge that a grid having the LiDAR coordinates as well as ultrasonic radar coordinates is occupied; judge that a grid only having the ultrasonic radar coordinates is not occupied.

The above aspect and any possible implementation further provides an implementation: the system is further configured to:
outside the detection overlapping regions, recognize the obstacle according to the LiDAR coordinates or ultrasonic radar coordinates, respectively.

A further aspect of the present invention provides a computer-readable storage medium on which a computer program is stored, the program, when executed by the processor, implementing the aforesaid method.

As known from the above technical solutions, in the embodiments of the present disclosure, it is possible to, by fusing the LiDAR coordinates with the ultrasonic radar coordinates, avoid the case that ultrasonic radar can only judge the obstacle distance and cannot judge the impact exerted by the obstacle direction on the travel of the driverless vehicle, thereby improving the obstacle recognition precision and ensuring safe and stable drive of the driverless vehicle.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
FIG. 1 is a flow chart of an information processing method according to an embodiment not covered by the claims of the present disclosure;
FIG. 2 is a structural schematic diagram of an information processing system according to an embodiment of the present disclosure;
FIG. 3 illustrates a block diagram of an example computer system/server 012 adapted to implement an implementation mode of the present disclosure.

### Detailed Description of Preferred Embodiments

To make objectives, technical solutions and advantages of embodiments of the present disclosure clearer, technical solutions of embodiment of the present disclosure will be described clearly and completely with reference to figures in embodiments of the present disclosure. Obviously, embodiments described here are partial embodiments of the present disclosure, not all embodiments.

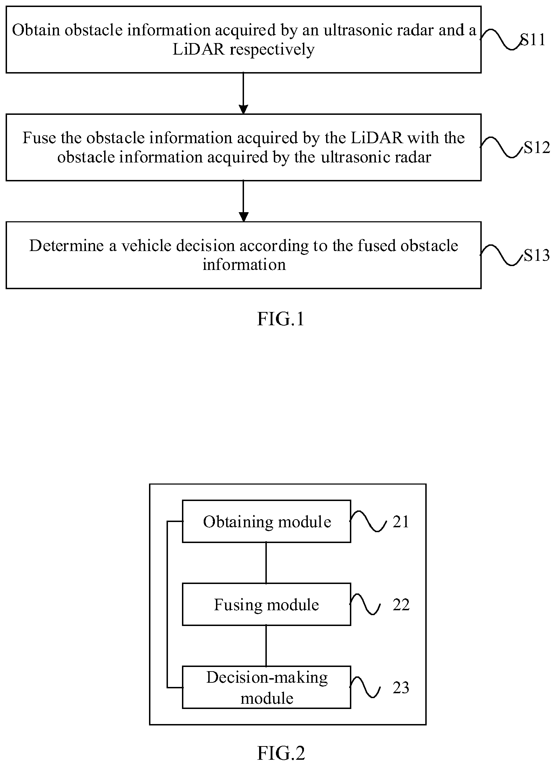

FIG. 1 is a flow chart of an information processing method according to an embodiment of the present disclosure not covered by the claims. As shown in FIG. 1, the method comprises the following steps:
Step S11: obtaining obstacle information acquired by an ultrasonic radar and a LiDAR respectively;
Step S12: fusing the obstacle information acquired by the LiDAR and the obstacle information acquired by the ultrasonic radar to determine an obstacle recognition result.

In a preferred implementation mode of Step S11,

In the present embodiment, the LiDAR is a single-line LiDAR, and mounted at the front of the driverless vehicle, e.g., at the center of an intake grill at a height about 40cm; the single-line LiDAR only has one transmitting path and one receiving path, and exhibits a relatively simple structure, convenient use, low costs, a high scanning speed, a high angular resolution and flexible range finding; the single-line LiDAR is more advantageous than multi-line LiDAR in aspects such as pedestrian detection, obstacle detection (small target detection) and detection of a front obstacle because the angular resolution of the single-line LiDAR may be made higher than the multi-line LiDAR, which is very useful in detecting the small object or pedestrian. Since the angular resolution of the single-line LiDAR may be made higher than the multi-line LiDAR, the pedestrian may be discovered in advance at a farther distance, and more early warning time may be left for the control system. The detection region of the single-line LiDAR is 0.5-8m in front of and laterally in front of the vehicle body of the driverless vehicle. The ultrasonic radars are symmetrically distributed with 3 ultrasonic radars on each of left and right sides in front of the vehicle, and their detection region is 0-3.5m in front of and laterally in front of the vehicle body of the driverless vehicle.

In the present embodiment, an electronic device (e.g., a vehicle-mounted computer or vehicle-mounted terminal) on which the method of fusing the information acquired by the ultrasonic radar with the information acquired by the LiDAR runs may control the LiDAR and the ultrasonic radar in a wired or wireless connection manner. Specifically, the vehicle-mounted computer or vehicle-mounted terminal may control the LiDAR to acquire laser point cloud data of a certain region at a certain frequency, and control the ultrasonic radar to acquire echo data of a certain region at a certain frequency. The above target region may be a region where the obstacle to be detected lies.

It needs to be appreciated that the wireless connection manner may include but not limited to 3G/4G connection, WiFi connection, Bluetooth connection, WiMAX connection, Zigbee connection, UWB (ultra wideband) connection, and other currently-known or future-developed wireless connection manners.

The point cloud information data of the obstacle within a 0.5-8m range ahead that may be acquired by the LiDAR is set to perform real-time update of the position of the obstacle in the detection region and the distance.

The LiDAR acquires the LiDAR point cloud information of the obstacle in front of the vehicle. The LiDAR rotates uniformly at a certain angular speed. During the process, laser is constantly emitted and information of a reflection point is collected to obtain omnidirectional environment information. While collecting the distance of the reflection point, the LiDAR meanwhile records the time of occurrence at this point and a horizontal angle, each laser emitter has a serial number and a fixed vertical angle, and coordinates of all reflection points may be calculated according to these data. A set of coordinates of all reflection points collected by the LiDAR upon each revolution forms the point cloud.

The interference in the laser point cloud is filtered away with a filter, and the target is detected by a mode clustering analysis method according to shape spatial position features of the target; a method of adjusting a distance threshold is used to re-combine sub-groups divided from the clustering, determine a new clustering center to implement the positioning of the target, and obtain the coordinates of the target.

Alternatively, information related to the obstacle, including parameters such as distance, azimuth, height, speed, posture and shape is obtained after using a preset point cloud recognition model to recognize the obstacle in the point cloud data. Therefore, the coordinate information of the obstacles in front of and laterally in front of the driverless vehicle is obtained. The preset point cloud recognition model may be various pre-trained algorithms capable of recognizing the obstacle in the point cloud data, for example, may be an ICP (Iterative Closest Point) algorithm, an random forest algorithm etc.

The ultrasonic radar obtains echo information of obstacles in front of and laterally in front of the vehicle. The ultrasonic radar may obtain the echo information data of the obstacles within a 0-3.5m close distance range. The echo information data is a differential value t between time of sending the ultrasonic wave and time of receiving a reflected wave, and a distance s=340t/2 between the ultrasonic radar and the obstacle may be calculated according to the differential value t. Thereby, the distance information data of the obstacle is obtained.

Data fusion may be performed after acquiring the laser point cloud information of the obstacles in front of and laterally in front of the vehicle through the LiDAR and acquiring the distance information of the obstacles in front of and laterally in front of the vehicle through the ultrasonic radar.

Step S12 comprises the following substeps:
Substep S121: unifying coordinates in a LiDAR coordinate system and coordinates in an ultrasonic radar coordinate system into a reference coordinate system.

Since mounting positions of a plurality of sensors of the LiDARs and ultrasonic radars are different, it is necessary to select a reference coordinate system to convert coordinates in the LiDAR coordinate system and coordinates of each ultrasonic radar coordinate system into the reference coordinate system. In the present embodiment, the coordinates in the LiDAR coordinate system and coordinates in the ultrasonic radar coordinate system may be unified and converted into a geodetic coordinate system.

Initial spatial configurations of the LiDAR and ultrasonic radar on the driverless vehicle are already known in advance, and may be obtained according to measurement data thereof on the vehicle body of the driverless vehicle. The coordinates of the obstacle in respective coordinate systems are converted into a consistent geodetic coordinate system.

Preferably, the driverless vehicle may further comprise a position and orientation system for acquiring position information and posture information of the position and orientation system, namely, the coordinates thereof in the geodetic coordinate system. The position information and posture information of the position and orientation system are used to combine with the LiDAR coordinates to obtain spatial coordinate data of the obstacle, and combine with the ultrasonic radar coordinates to obtain spatial distance data of the obstacle.

Exemplarily, the position and orientation system may comprise a GPS positioning device and an IMU for acquiring the position information and posture information of the position and orientation system respectively. The position information may include central coordinates (x, y, z) of the position and orientation system, and the posture information may include three posture angles ( ω , κ ) of the position and orientation system. The relative positions between the position and orientation system and LiDAR are constant, so the position information and posture information of the LiDAR may be determined according to the position information and posture information of the position and orientation system. Then, 3D laser scanned data may be corrected according to the position information and posture information of the LiDAR to determine the spatial coordinate data of the obstacle. The relative positions between the position and orientation system and the ultrasonic probes of the ultrasonic radars are constant, so the position information and the posture information of the ultrasonic probes may be determined according to the position information and posture information of the position and orientation system. Then, ultrasonic distance data may be corrected according to the position information and posture information of the ultrasonic probes to determine spatial distance data of the obstacle.

The LiDAR coordinates and the ultrasonic radar coordinates are unified through the above conversion to lay a foundation for coordinate fusion.

In a preferred implementation of the present embodiment, the LiDAR coordinates and the ultrasonic radar coordinates may be unified to a vehicle coordinate system, including LiDAR point cloud coordinate conversion. A matrix relationship between the LiDAR coordinate system and the vehicle coordinate system is calibrated through the initial space configuration of the LiDAR on the driverless vehicle. During the installation of the LiDAR, the coordinates of the LiDAR is angularly offset from the vehicle coordinates in 3D space, and conversion needs to be performed by modifying the matrix. The matrix is converted according to the relationship between the initial spatial configuration of each ultrasonic radar on the driverless vehicle and the vehicle coordinate system.

Substep S122: superimposing the unified LiDAR coordinates and ultrasonic radar coordinates in a gridded detection overlapping region.

Since the detection regions of the LiDAR and ultrasonic radar are different, the detection overlapping regions of the LiDAR and ultrasonic radar are fused to determine an obstacle recognition result.

Outside the detection overlapping regions, the obstacle is still recognized according to the respective coordinates.

Preferably, the detection overlapping region is within a range of 0.5-3.5m in front of and laterally in front of the vehicle body, the obstacle recognition result in the detection overlapping region is gridded, and a grid attribute is set. Preferably, the detection precision of the LiDAR is ± 3 cm, the precision of the distance detected by the ultrasonic radar is 10cm, and the grid is set as a unit grid having the size 20cm × 20cm with the total number of grids being considered.

The LiDAR coordinates and ultrasonic radar coordinates unified into the geodetic coordinate system or vehicle coordinate system are superimposed in the grids.

Substep S123: fusing the superimposed LiDAR coordinates and ultrasonic radar coordinates to determine an obstacle recognition result.

In the present embodiment, the coordinates output by the ultrasonic radar are distance data of the obstacle, namely, a circular arc range with the ultrasonic radar as a center of a circle and with the distance data as a radius is totally recognized by the ultrasonic radar as the obstacle. However, the obstacle in fact might be located at any point or more points on the circular arc range. In this case, it is necessary to judge which point on the circular arc range the obstacle is specifically located through the LiDAR coordinates.

Preferably, the following judgment manner is employed: judging that a grid point having the LiDAR coordinates as well as ultrasonic radar coordinates is occupied; judging that a grid point only having the ultrasonic radar coordinates is not occupied. This avoids occurrence of the case in which outputting the entire circular arc when the obstacle is located on a side of the driverless vehicle causes the driverless vehicle to believe there is an obstacle ahead and brake to avoid the obstacle. If the grid point of the detection overlapping region is not occupied, it is believed that the obstacle is located at a portion that the circular arc range is located outside the detection overlapping region.

The method further comprises the following step S13: determining a vehicle decision according to the fused obstacle information.

The vehicle decision is determined according to the post-fusion obstacle recognition result in the detection overlapping region and the obstacle recognition result outside the detection overlapping region. If there is an obstacle in front of the vehicle, the vehicle is controlled to decelerate. If there is an obstacle laterally in front of the vehicle, the vehicle continues to drive.

It is possible to, through the solution of the present embodiment, avoid the problem that whether there is an obstacle laterally in front of or directly in front of the vehicle cannot be judged only according to the obstacle information returned by the ultrasonic radar, so that the driverless vehicle will stop automatically to avoid collision and its normal drive is affected, and possible to improve the obstacle recognition precision and ensure safe and stable drive of the driverless vehicle.

In a preferred implementation of the present embodiment, during the drive of the driverless vehicle, only in the case that the obstacle information returned by the ultrasonic radar affects the normal travel of the driverless vehicle, the obstacle information acquired by the LiDAR is fused with the obstacle information acquired by the ultrasonic radar, to determine the obstacle recognition result, to reduce the amount of operation of the system and improve the response speed.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

The above introduces the method embodiments. The solution of the present disclosure will be further described through an apparatus embodiment.

FIG. 2 is a structural schematic diagram of an information processing system according to an embodiment of the present disclosure. As shown in FIG. 2, the system comprises:
an obtaining module 21 configured to obtain obstacle information acquired by an ultrasonic radar and a LiDAR respectively;
a fusing module 22 configured to fuse the obstacle information acquired by the LiDAR with the obstacle information acquired by the ultrasonic radar to determine an obstacle recognition result.

In the present embodiment, the LiDAR is a single-line LiDAR, and mounted at the front of the driverless vehicle, e.g., at the center of an intake grill at a height about 40cm; the single-line LiDAR only has one transmitting path and one receiving path, and exhibits a relatively simple structure, convenient use, low costs, a high scanning speed, a high angular resolution and flexible range finding; the single-line LiDAR is more advantageous than multi-line LiDAR in aspects such as pedestrian detection, obstacle detection (small target detection) and detection of a front obstacle because the angular resolution of the single-line LiDAR may be made higher than the multi-line LiDAR, which is very useful in detecting the small object or pedestrian. Since the angular resolution of the single-line LiDAR may be made higher than the multi-line LiDAR, the pedestrian may be discovered in advance at a farther distance, and more early warning time may be left for the control system. The detection region of the single-line LiDAR is 0.5-8m in front of and laterally in front of the vehicle body of the driverless vehicle. The ultrasonic radars are symmetrically distributed with 3 ultrasonic radars on each of left and right sides in front of the vehicle, and their detection region is 0-3.5m in front of and laterally in front of the vehicle body of the driverless vehicle.

In the present embodiment, an electronic device (e.g., a vehicle-mounted computer or vehicle-mounted terminal) on which the method of fusing the information acquired by the ultrasonic radar with the information acquired by the LiDAR runs may control the LiDAR and the ultrasonic radar in a wired or wireless connection manner. Specifically, the vehicle-mounted computer or vehicle-mounted terminal may control the LiDAR to acquire laser point cloud data of a certain region at a certain frequency, and control the ultrasonic radar to acquire echo data of a certain region at a certain frequency. The above target region may be a region where the obstacle to be detected lies.

It needs to be appreciated that the wireless connection manner may include but not limited to 3G/4G connection, WiFi connection, Bluetooth connection, WiMAX connection, Zigbee connection, UWB (ultra wideband) connection, and other currently-known or future-developed wireless connection manners.

The point cloud information data of the obstacle within a 0.5-8m range ahead that may be acquired by the LiDAR is set to perform real-time update of the position of the obstacle in the detection region and the distance.

The LiDAR acquires the LiDAR point cloud information of the obstacle in front of the vehicle. The LiDAR rotates uniformly at a certain angular speed. During the process, laser is constantly emitted and information of a reflection point is collected to obtain omnidirectional environment information. While collecting the distance of the reflection point, the LiDAR meanwhile records the time of occurrence at this point and a horizontal angle, each laser emitter has a serial number and a fixed vertical angle, and coordinates of all reflection points may be calculated according to these data. A set of coordinates of all reflection points collected by the LiDAR upon each revolution forms the point cloud.

The interference in the laser point cloud is filtered away with a filter, and the target is detected by a mode clustering analysis method according to shape spatial position features of the target; a method of adjusting a distance threshold is used to re-combine sub-groups divided from the clustering, determine a new clustering center to implement the positioning of the target, and obtain the coordinates of the target.

Alternatively, information related to the obstacle, including parameters such as distance, azimuth, height, speed, posture and shape is obtained after using a preset point cloud recognition model to recognize the obstacle in the point cloud data. Therefore, the coordinate information of the obstacles in front of and laterally in front of the driverless vehicle is obtained. The preset point cloud recognition model may be various pre-trained algorithms capable of recognizing the obstacle in the point cloud data, for example, may be an ICP (Iterative Closest Point) algorithm, an random forest algorithm etc.

The ultrasonic radar obtains echo information of obstacles in front of and laterally in front of the vehicle. The ultrasonic radar may obtain the echo information data of the obstacles within a 0-3.5m close distance range. The echo information data is a differential value t between time of sending the ultrasonic wave and time of receiving a reflected wave, and a distance s=340t/2 between the ultrasonic radar and the obstacle may be calculated according to the differential value t. Thereby, the distance information data of the obstacle is obtained.

Data fusion may be performed after acquiring the laser point cloud information of the obstacles in front of and laterally in front of the vehicle through the LiDAR and acquiring the distance information of the obstacles in front of and laterally in front of the vehicle through the ultrasonic radar.

The fusing module 22 comprises the following submodules:
a unifying submodule configured to unify coordinates in a LiDAR coordinate system and coordinates in an ultrasonic radar coordinate system into a reference coordinate system.

Since mounting positions of a plurality of sensors of the LiDARs and ultrasonic radars are different, it is necessary to select a reference coordinate system to convert coordinates in the LiDAR coordinate system and coordinates of each ultrasonic radar coordinate system into the reference coordinate system. In the present embodiment, the coordinates in the LiDAR coordinate system and coordinates in the ultrasonic radar coordinate system may be unified and converted into a geodetic coordinate system.

Initial spatial configurations of the LiDAR and ultrasonic radar on the driverless vehicle are already known in advance, and may be obtained according to measurement data thereof on the vehicle body of the driverless vehicle. The coordinates of the obstacle in respective coordinate systems are converted into a consistent geodetic coordinate system.

Preferably, the driverless vehicle may further comprise a position and orientation system for acquiring position information and posture information of the position and orientation system, namely, the coordinates thereof in the geodetic coordinate system. The position information and posture information of the position and orientation system are used to combine with the LiDAR coordinates to obtain spatial coordinate data of the obstacle, and combine with the ultrasonic radar coordinates to obtain spatial distance data of the obstacle.

Exemplarily, the position and orientation system may comprise a GPS positioning device and an IMU for acquiring the position information and posture information of the position and orientation system respectively. The position information may include central coordinates (x, y, z) of the position and orientation system, and the posture information may include three posture angles (ω,κ) of the position and orientation system. The relative positions between the position and orientation system and LiDAR are constant, so the position information and posture information of the LiDAR may be determined according to the position information and posture information of the position and orientation system. Then, 3D laser scanned data may be corrected according to the position information and posture information of the LiDAR to determine the spatial coordinate data of the obstacle. The relative positions between the position and orientation system and the ultrasonic probes of the ultrasonic radars are constant, so the position information and the posture information of the ultrasonic probes may be determined according to the position information and posture information of the position and orientation system. Then, ultrasonic distance data may be corrected according to the position information and posture information of the ultrasonic probes to determine spatial distance data of the obstacle.

The LiDAR coordinates and the ultrasonic radar coordinates are unified through the above conversion to lay a foundation for coordinate fusion.

The LiDAR coordinates and the ultrasonic radar coordinates may be unified to a vehicle coordinate system, including LiDAR point cloud coordinate conversion. A matrix relationship between the LiDAR coordinate system and the vehicle coordinate system is calibrated through the initial space configuration of the LiDAR on the driverless vehicle. During the installation of the LiDAR, the coordinates of the LiDAR is angularly offset from the vehicle coordinates in 3D space, and conversion needs to be performed by modifying the matrix. The matrix is converted according to the relationship between the initial spatial configuration of each ultrasonic radar on the driverless vehicle and the vehicle coordinate system.

A superimposing submodule configured to superimpose the unified LiDAR coordinates and ultrasonic radar coordinates in a gridded detection overlapping region.

Since the detection regions of the LiDAR and ultrasonic radar are different, the detection overlapping regions of the LiDAR and ultrasonic radars are fused to determine an obstacle recognition result.

Preferably, outside the detection overlapping regions, the obstacle is still recognized according to the respective coordinates.

Preferably, the detection overlapping region is within a range of 0.5-3.5m in front of and laterally in front of the vehicle body, the obstacle recognition result in the detection overlapping region is gridded, and a grid attribute is set. Preferably, the detection precision of the LiDAR is ±3 cm, the precision of the distance detected by the ultrasonic radar is 10cm, and the grid is set as a unit grid having the size 20cm×20cm with the total number of grids being considered.

The LiDAR coordinates and ultrasonic radar coordinates unified into the geodetic coordinate system or vehicle coordinate system are superimposed in the grids.

A fusing submodule configured to fuse the superimposed LiDAR coordinates and ultrasonic radar coordinates.

In the present embodiment, the coordinates output by the ultrasonic radar are distance data of the obstacle, namely, a circular arc range with the ultrasonic radar as a center of a circle and with the distance data as a radius is totally recognized by the ultrasonic radar as the obstacle. However, the obstacle in fact might be located at any point or more points on the circular arc range. In this case, it is necessary to judge which point on the circular arc range the obstacle is specifically located through the LiDAR coordinates.

Preferably, the following judgment manner is employed: judging that a grid point having the LiDAR coordinates as well as ultrasonic radar coordinates is occupied; judging that a grid point only having the ultrasonic radar coordinates is not occupied. This avoids occurrence of the case in which outputting the entire circular arc when the obstacle is located on a side of the driverless vehicle causes the driverless vehicle to believe there is an obstacle ahead and brake to avoid the obstacle. If the grid point of the detection overlapping region is not occupied, it is believed that the obstacle is located at a portion that the circular arc range is located outside the detection overlapping region.

The method further comprises a decision-making module 23 configured to determine a vehicle decision according to the fused obstacle information.

The vehicle decision is determined according to the post-fusion obstacle recognition result in the detection overlapping region and the obstacle recognition result outside the detection overlapping region. If there is an obstacle in front of the vehicle, the vehicle is controlled to decelerate. If there is an obstacle laterally in front of the vehicle, the vehicle continues to drive.

It is possible to, through the solution of the present embodiment, avoid the problem that whether there is an obstacle laterally in front of or directly in front of the vehicle cannot be judged only according to the obstacle information returned by the ultrasonic radar, so that the driverless vehicle will stop automatically to avoid collision and its normal drive is affected, and possible to improve the obstacle recognition precision and ensure safe and stable drive of the driverless vehicle.

In a preferred implementation of the present embodiment, during the drive of the driverless vehicle, only in the case that the obstacle information returned by the ultrasonic radar affects the normal travel of the driverless vehicle, the obstacle information acquired by the LiDAR is fused with the obstacle information acquired by the ultrasonic radar, to determine the obstacle recognition result, to reduce the amount of operation of the system and improve the response speed.

In the above embodiments, embodiments are respectively described with different emphasis being placed, and reference may be made to related depictions in other embodiments for portions not detailed in a certain embodiment.

In the embodiments provided by the present invention, it should be understood that the revealed method and apparatus may be implemented in other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be performed via some interfaces, and indirect coupling or communicative connection of means or units may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present invention, functional units can be integrated in one processing unit, or they can be separate physical presences; or two or more units can be integrated in one unit. The integrated unit described above can be realized in the form of hardware, or they can be realized with hardware and software functional units.

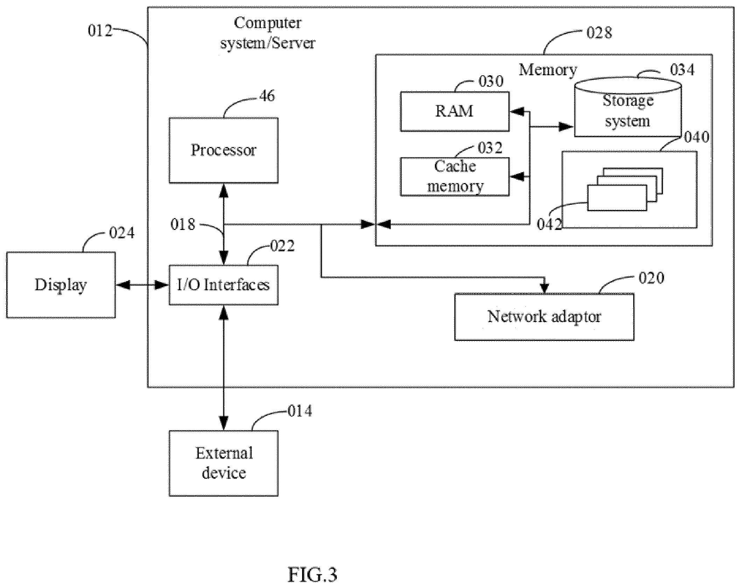

FIG. 3 illustrates a block diagram of an example computer system/server 012 adapted to implement an implementation mode of the present disclosure.

As shown in FIG. 3, the computer system/server 012 is shown in the form of a general-purpose computing device. The components of the computer system/server 012 may include, but are not limited to, one or more processors or processing units 016, a system memory 028, and a bus 018 that couples various system components including the system memory 028 and the processing unit 016.

Bus 018 represents one or more of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system/server 012 typically includes a variety of computer system readable media. Such media may be any available media that is accessible by computer system/server 012, and it includes both volatile and non-volatile media, removable and non-removable media.

Memory 028 can include computer system readable media in the form of volatile memory, such as random access memory (RAM) 030 and/or cache memory 032. Computer system/server 012 may further include other removable/non-removable, volatile/non-volatile computer system storage media. By way of example only, storage system 034 can be provided for reading from and writing to a non-removable, non-volatile magnetic media (not shown in FIG. 3 and typically called a "hard drive"). Although not shown in FIG. 3, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each drive can be connected to bus 018 by one or more data media interfaces. The memory 028 may include at least one program product having a set of (e.g., at least one) program modules that are configured to carry out the functions of embodiments of the present disclosure.

Program/utility 040, having a set of (at least one) program modules 042, may be stored in the system memory 028 by way of example, and not limitation, as well as an operating system, one or more disclosure programs, other program modules, and program data. Each of these examples or a certain combination thereof might include an implementation of a networking environment. Program modules 042 generally carry out the functions and/or methodologies of embodiments of the present disclosure.

Computer system/server 012 may also communicate with one or more external devices 014 such as a keyboard, a pointing device, a display 024, etc.; with one or more devices that enable a user to interact with computer system/server 012; and/or with any devices (e.g., network card, modem, etc.) that enable computer system/server 012 to communicate with one or more other computing devices. Such communication can occur via Input/Output (I/O) interfaces 022. Still yet, computer system/server 012 can communicate with one or more networks such as a local area network (LAN), a general wide area network (WAN), and/or a public network (e.g., the Internet) via network adapter 020. As shown in the figure, network adapter 020 communicates with the other communication modules of computer system/server 012 via bus 018. It should be understood that although not shown in FIG. 3, other hardware and/or software modules could be used in conjunction with computer system/server 012. Examples, include, but are not limited to: microcode, device drivers, redundant processing units, external disk drive arrays, RAID systems, tape drives, and data archival storage systems, etc.

The processing unit 016 executes the functions and/or methods described in the embodiments of the present disclosure by running the programs stored in the system memory 028.

The aforesaid computer program may be arranged in the computer storage medium, namely, the computer storage medium is encoded with the computer program. The computer program, when executed by one or more computers, enables one or more computers to execute the flow of the method and/or operations of the apparatus as shown in the above embodiments of the present disclosure.

As time goes by and technologies develop, the meaning of medium is increasingly broad. A propagation channel of the computer program is no longer limited to tangible medium, and it may also be directly downloaded from the network. The computer-readable medium of the present embodiment may employ any combinations of one or more computer-readable media. The machine readable medium may be a machine readable signal medium or a machine readable storage medium. A machine readable medium may include, but not limited to, an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the text herein, the computer readable storage medium can be any tangible medium that include or store programs for use by an instruction execution system, apparatus or device or a combination thereof.

The computer-readable signal medium may be included in a baseband or serve as a data signal propagated by part of a carrier, and it carries a computer-readable program code therein. Such propagated data signal may take many forms, including, but not limited to, electromagnetic signal, optical signal or any suitable combinations thereof. The computer-readable signal medium may further be any computer-readable medium besides the computer-readable storage medium, and the computer-readable medium may send, propagate or transmit a program for use by an instruction execution system, apparatus or device or a combination thereof.

The program codes included by the computer-readable medium may be transmitted with any suitable medium, including, but not limited to radio, electric wire, optical cable, RF or the like, or any suitable combination thereof.

Computer program code for carrying out operations disclosed herein may be written in one or more programming languages or any combination thereof. These programming languages include an object oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

## Claims

1. An information processing method comprising:
obtaining (S11) obstacle information acquired by an ultrasonic radar and a LiDAR respectively;
fusing (S12) the obstacle information acquired by the LiDAR with the obstacle information acquired by the ultrasonic radar,
characterized in that_ the fusing the obstacle information acquired by the LiDAR with the obstacle information acquired by the ultrasonic radar comprises:
unifying coordinates in a LiDAR coordinate system and coordinates in an ultrasonic radar coordinate system into a reference coordinate system;
fusing the detection overlapping regions of the LiDAR and the ultrasonic radar, gridding an obstacle recognition result in the detection overlapping region, and superimposing the unified LiDAR coordinates and ultrasonic radar coordinates in the grids;
fusing the superimposed LiDAR coordinates and ultrasonic radar coordinates, and
determining (S13) a vehicle decision according to the post-fusion obstacle recognition result in the detection overlapping region and the obstacle recognition result outside the detection overlapping region according to the LiDAR coordinates or ultrasonic radar coordinates respectively.

2. The method according to claim 1, wherein
the ultrasonic radar is mounted at the front of a vehicle body of a driverless vehicle and used to detect obstacle information in front of and laterally in front of the vehicle;
the LiDAR is mounted at the front of the vehicle body of the driverless vehicle and used to detect the obstacle information in front of and laterally in front of the vehicle.

3. The method according to claim 1, wherein the reference coordinate system is a geodetic coordinate system or a vehicle coordinate system.

4. The method according to claim 1, wherein the fusing the superimposed LiDAR coordinates and ultrasonic radar coordinates comprises:
judging that a grid having the LiDAR coordinates as well as ultrasonic radar coordinates is occupied; judging that a grid only having the ultrasonic radar coordinates is not occupied.

5. An information processing system comprising:
an obtaining module (21) configured to obtain obstacle information acquired by an ultrasonic radar and a LiDAR respectively;
a fusing module (22) configured to fuse the obstacle information acquired by the LiDAR with the obstacle information acquired by the ultrasonic radar,
**characterized in that** the fusing module comprises:
a unifying submodule configured to unify coordinates in a LiDAR coordinate system and coordinates in an ultrasonic radar coordinate system into a reference coordinate system;
a superimposing submodule configured to fuse the detection overlapping regions of the LiDAR and the ultrasonic radar, grid an obstacle recognition result in the detection overlapping region, and superimpose the unified LiDAR coordinates and ultrasonic radar coordinates in the grids,
a fusing submodule configured to fuse the superimposed LiDAR coordinates and ultrasonic radar coordinates, and
a decision-making (23) module configured to determine a vehicle decision according to the post-fusion obstacle recognition result in the detection overlapping region and the obstacle recognition result outside the detection overlapping region according to the LiDAR coordinates or ultrasonic radar coordinates respectively.

6. The system according to claim 5, wherein
the ultrasonic radar is mounted at the front of a vehicle body of a driverless vehicle and used to detect obstacle information in front of and laterally in front of the vehicle;
the LiDAR is mounted at the front of the vehicle body of the driverless vehicle and used to detect the obstacle information in front of and laterally in front of the vehicle.

7. The system according to claim 5, wherein the reference coordinate system is a geodetic coordinate system or a vehicle coordinate system.

8. A computer-readable storage medium on which a computer program is stored, wherein the program, when executed by the processor, implements the method according to any of claims 1-4.

## Patentansprüche

1. Informationsverarbeitungsverfahren, das umfasst:
Erfassen (S11) von Hindernisinformationen, die von einem Ultraschallradar bzw. einem LiDAR gewonnen werden;
Verschmelzen (S12) der von dem LiDAR gewonnenen Hindernisinformationen mit den von dem Ultraschallradar gewonnenen Hindernisinformationen,
**dadurch gekennzeichnet, dass** das Verschmelzen der von dem LiDAR erfassten Hindernisinformationen mit den von dem Ultraschallradar gewonnenen Hindernisinformationen umfasst:
Zusammenführen von Koordinaten in einem LiDAR-Koordinatensystem und von Koordinaten in einem Ultraschallradar-Koordinatensystem in ein Referenzkoordinatensystem;
Verschmelzen der Detektionsüberlappungsbereiche des LiDAR und des Ultraschallradars, Rastern eines Hinderniserkennungsergebnisses in dem Detektionsüberlappungsbereich, und Überlagern der zusammengeführten LiDAR-Koordinaten und Ultraschallradar-Koordinaten in den Rastern;
Verschmelzen der überlagerten LiDAR-Koordinaten und Ultraschallradar-Koordinaten; und
Bestimmen (S13) einer Fahrzeugentscheidung entsprechend dem Hinderniserkennungsergebnis nach dem Verschmelzen in dem Detektionsüberlappungsbereich und dem Hinderniserkennungsergebnis außerhalb des Detektionsüberlappungsbereichs entsprechend den LiDAR-Koordinaten bzw. Ultraschallradar-Koordinaten.

2. Verfahren nach Anspruch 1, wobei
der Ultraschallradar vorne an einer Fahrzeugkarosserie eines fahrerlosen Fahrzeugs montiert ist und dazu verwendet wird, Hindernisinformationen vor und seitlich vor dem Fahrzeug zu detektieren;
der LiDAR vorne an der Fahrzeugkarosserie des fahrerlosen Fahrzeugs montiert ist und dazu verwendet wird, die Hindernisinformationen vor und seitlich vor dem Fahrzeug zu detektieren.

3. Verfahren nach Anspruch 1, wobei das Referenzkoordinatensystem ein geodätisches Koordinatensystem oder ein Fahrzeugkoordinatensystem ist.

4. Verfahren nach Anspruch 1, wobei das Verschmelzen der überlagerten LiDAR-Koordinaten und Ultraschallradar-Koordinaten umfasst:
Beurteilen, dass ein Raster mit den LiDAR-Koordinaten und den Ultraschallradar-Koordinaten belegt ist; Beurteilen, dass ein Raster nur mit den Ultraschallradar-Koordinaten nicht belegt ist.

5. Informationsverarbeitungssystem, das aufweist:
ein Erfassungsmodul (21), das dazu ausgebildet ist, Hindernisinformationen zu erfassen, die von einem Ultraschallradar bzw. einem LiDAR gewonnen werden;
ein Verschmelzungsmodul (22), das dazu ausgebildet ist, die von dem LiDAR gewonnenen Hindernisinformationen mit den von dem Ultraschallradar gewonnenen Hindernisinformationen zu verschmelzen,
**dadurch gekennzeichnet, dass** das Verschmelzungsmodul umfasst:
ein Zusammenführungsmodul, das dazu ausgebildet ist, Koordinaten in einem LiDAR-Koordinatensystem und Koordinaten in einem Ultraschallradar-Koordinatensystem in ein Referenzkoordinatensystem zusammenzuführen;
ein Überlagerungsmodul, das dazu ausgebildet ist, die Detektionsüberlappungsbereiche des LiDAR und des Ultraschallradars zu verschmelzen, ein Hinderniserkennungsergebnis in dem Detektionsüberlappungsbereich zu rastern, und die zusammengeführten LiDAR-Koordinaten und Ultraschallradar-Koordinaten in den Rastern zu überlagern,
ein Verschmelzungssubmodul, das dazu ausgebildet ist, die überlagerten LiDAR-Koordinaten und Ultraschallradar-Koordinaten zu verschmelzen, und
ein Entscheidungsfindungsmodul (23), das dazu ausgebildet ist, eine Fahrzeugentscheidung entsprechend dem Hinderniserkennungsergebnis nach dem Verschmelzen in dem Detektionsüberlappungsbereich und dem Hinderniserkennungsergebnis außerhalb des Detektionsüberlappungsbereichs entsprechend den LiDAR-Koordinaten bzw. Ultraschallradar-Koordinaten zu bestimmen.

6. System nach Anspruch 5, wobei
der Ultraschallradar vorne an einer Fahrzeugkarosserie eines fahrerlosen Fahrzeugs montiert ist und dazu verwendet wird, Hindernisinformationen vor und seitlich vor dem Fahrzeug zu detektieren;
der LiDAR vorne an der Fahrzeugkarosserie des fahrerlosen Fahrzeugs montiert ist und dazu verwendet wird, die Hindernisinformationen vor und seitlich vor dem Fahrzeug zu detektieren.

7. System nach Anspruch 5, wobei das Referenzkoordinatensystem ein geodätisches Koordinatensystem oder ein Fahrzeugkoordinatensystem ist.

8. Computerlesbares Speichermedium, auf dem ein Computerprogramm gespeichert ist, wobei das Programm bei Ausführung durch den Prozessor das Verfahren nach einem der Ansprüche 1-4 implementiert.

## Revendications

1. Procédé de traitement d'informations, comprenant :
l'obtention (S11) d'informations d'obstacle collectées respectivement par un radar à ultrasons et un LiDAR ;
la fusion (S12) des informations d'obstacle collectées par le LiDAR avec les informations d'obstacle collectées par le radar à ultrasons,
caractérisé en ce que_ la fusion des informations d'obstacle collectées par le LiDAR avec les informations d'obstacle collectées par le radar à ultrasons comprend :
l'unification de coordonnées dans un système de coordonnées LiDAR et de coordonnées dans un système de coordonnées radar à ultrasons en un système de coordonnées de référence ;
la fusion des régions de chevauchement de détection du LiDAR et du radar à ultrasons, le maillage d'un résultat de reconnaissance d'obstacle dans la région de chevauchement de détection, et la superposition des coordonnées LiDAR unifiées et des coordonnées radar à ultrasons dans les grilles ;
la fusion des coordonnées LiDAR superposées et des coordonnées radar à ultrasons, et
la détermination (S13) d'une décision de véhicule selon le résultat de reconnaissance d'obstacle post-fusion dans la région de chevauchement de détection et le résultat de reconnaissance d'obstacle à l'extérieur de la région de chevauchement de détection selon les coordonnées LiDAR ou les coordonnées radar à ultrasons, respectivement.

2. Procédé selon la revendication 1, dans lequel
le radar à ultrasons est monté à l'avant d'une carrosserie de véhicule d'un véhicule sans conducteur et utilisé pour détecter des informations d'obstacle devant et latéralement devant le véhicule ;
le LiDAR est monté à l'avant de la carrosserie du véhicule sans conducteur et utilisé pour détecter les informations d'obstacle devant et latéralement devant le véhicule.

3. Procédé selon la revendication 1, dans lequel le système de coordonnées de référence est un système de coordonnées géodésiques ou un système de coordonnées de véhicule.

4. Procédé selon la revendication 1, dans lequel la fusion des coordonnées LiDAR et des coordonnées radar à ultrasons superposées comprend :
le fait de juger qu'une grille ayant les coordonnées LiDAR ainsi que les coordonnées radar à ultrasons est occupée ; le fait de juger qu'une grille comportant uniquement les coordonnées radar à ultrasons n'est pas occupée.

5. Système de traitement d'informations comprenant :
un module d'obtention (21) configuré pour obtenir des informations d'obstacle collectées respectivement par un radar à ultrasons et un LiDAR ;
un module de fusion (22) configuré pour fusionner les informations d'obstacle collectées par le LiDAR avec les informations d'obstacle collectées par le radar à ultrasons,
**caractérisé en ce que** le module de fusion comprend :
un sous-module unificateur configuré pour unifier les coordonnées dans un système de coordonnées LiDAR et les coordonnées dans un système de coordonnées radar à ultrasons dans un système de coordonnées de référence ;
un sous-module de superposition configuré pour fusionner les régions de chevauchement de détection du LiDAR et du radar à ultrasons, mailler un résultat de reconnaissance d'obstacle dans la région de chevauchement de détection, et superposer les coordonnées LiDAR unifiées et les coordonnées de radar à ultrasons dans les grilles,
un sous-module de fusion configuré pour fusionner les coordonnées LiDAR et les coordonnées radar à ultrasons superposées, et
un module de prise de décision (23) configuré pour déterminer une décision de véhicule selon le résultat de reconnaissance d'obstacle post-fusion dans la région de chevauchement de détection et le résultat de reconnaissance d'obstacle à l'extérieur de la région de chevauchement de détection selon les coordonnées LiDAR ou les coordonnées radar à ultrasons, respectivement.

6. Système selon la revendication 5, dans lequel
le radar à ultrasons est monté à l'avant d'une carrosserie de véhicule d'un véhicule sans conducteur et utilisé pour détecter des informations d'obstacle devant et latéralement devant le véhicule ;
le LiDAR est monté à l'avant de la carrosserie du véhicule sans conducteur et utilisé pour détecter les informations d'obstacle devant et latéralement devant le véhicule.

7. Système selon la revendication 5, dans lequel le système de coordonnées de référence est un système de coordonnées géodésiques ou un système de coordonnées de véhicule.

8. Support de stockage lisible par ordinateur sur lequel un programme informatique est stocké, dans lequel le programme, lorsqu'il est exécuté par un processeur, met en oeuvre le procédé selon l'une quelconque des revendications 1 à 4.
